(19) Europäisches Patentamt / European Patent Office / Office européen des brevets

(11) **EP 2 637 371 A1**

(12) **EUROPEAN PATENT APPLICATION**

(43) Date of publication:
**11.09.2013 Bulletin 2013/37**

(51) Int Cl.:
**H04L 12/70** (2013.01)

(21) Application number: **12250053.1**

(22) Date of filing: **09.03.2012**

| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME**<br><br>(71) Applicant: **British Telecommunications Public Limited Company**<br>**London EC1A 7AJ (GB)** | (72) Inventor: **The designation of the inventor has not yet been filed**<br><br>(74) Representative: **Geffen, Nigel Paul**<br>**BT Group Legal**<br>**Intellectual Property Department**<br>**PP C5A - BT Centre**<br>**81 Newgate Street**<br>**GB-London EC1A 7AJ (GB)** |

(54) **Signalling congestion**

(57)     Methods and apparatus are disclosed for signalling congestion being caused by data items such as packets, received at a network element such as a router, in a communications network such as the Internet. Preferred embodiments of the method involve identifying whether or not received data items are capable of carrying congestion indications such as ECN marks, and for those that are capable, assigning congestion indications to the data items in dependence on a queue length characterisation based on a substantially current, instantaneous measurement of the length of the queue, whereas for those that are not capable, a sanction such as dropping may be applied with a probability dependent on a different queue length characterisation based on a weighted moving average of current, recent, and less recent measurements of the length of the queue.

Figure 7 – Flow diagram for AQM with smoothed loss signalling but instantaneous ECN signalling

## Description

## Technical Field

The present invention relates to methods and apparatus for signalling congestion being caused by data items such as packets received at a network element such as a router in a communications network such as the Internet.

## Background to the Invention and Prior Art

We start by presenting some basic concepts to facilitate the understanding of the numerous policing techniques that are presented afterwards.

## Packets

A data sender usually splits data to be sent into small units known as packets. Each packet consists of a header and a payload carrying the data to be delivered. The header contains fields defined by the relevant communication protocol. The great majority of packets carried by commercial networks nowadays are so-called IP packets. IP is the Internet Protocol. This ensures that a network of routers can forward any packet from the source to its destination. IP is a connectionless protocol - that means that the header information in each data packet is sufficiently self-contained for routers to deliver it independently of other packets; each packet could even take a different route to reach the destination.

## Distributed bandwidth sharing and congestion

Data traversing the Internet follows a path between a series of routers, controlled by various routing protocols. Each router seeks to move the packet closer to its final destination. If too much traffic traverses the same router in the network, the router can become congested and packets start to experience excessive delays whilst using that network path. If sources persist in sending traffic through that router it could become seriously overloaded (congested) and even drop traffic (when its buffers overflow). If sources still persist in sending traffic through this bottleneck it could force more routers to become congested, and if the phenomenon keeps spreading, that can lead to a congestion collapse for the whole Internet - which occurred regularly in the mid-1980s.

The solution to that problem has been to ensure that sources take responsibility for the rate at which they send data over the Internet by implementing congestion control mechanisms. Sources monitor feedback from the receiver of the metric that characterises path congestion in order to detect when the path their data is following is getting congested, in which case they react by reducing their throughput - while they may slowly increase their rate when there is no sign of the path becoming congested.

Typical path characterisation metrics that sources monitor are average roundtrip time (RTT) for the data path, variance of the roundtrip time (jitter) and level of congestion on the path.

The congestion level can be signalled either implicitly (through congested routers dropping packets when their buffers overflow or to protect themselves) or explicitly (through mechanisms such as explicit congestion notification - see next subsection). Currently the most common option is implicit signalling.

Sources using TCP are able to detect losses, because a packet loss causes a gap in the sequence; whenever a TCP source detects a loss, it is meant to halve its data transmission rate, but no more than once per round trip time, which alleviates the congestion on the router at the bottleneck.

## DEC-bit scheme

The DEC-bit scheme was the ancestor of modern mechanisms to convey congestion notification in packet networks by providing explicit congestion notification to the sources. This is discussed in a paper entitled "The Addition of Explicit Congestion Notification (ECN) to IP" by Ramakrishnan and Jain, which will be referred to for convenience as [RAN90a]. Bibliographic details of this and other prior art documents are provided in the "References" section below. With this scheme when a router detects congestion it sets a bit (CI) in each packet, the receiver then relays this information back to the sender in its acknowledgments, and the sender in turn adjusts its transmission rate. In the router the congestion detection algorithm is based on average queue length. The source reaction to DEC-bit in acknowledgments is an Additive Increase Multiplicative Decrease (AIMD) response which means that congestion window grows at linear rate in the absence of congestion feedback and it declines multiplicatively (i.e. exponentially) for every congestion feedback event.

## Explicit Congestion Notification

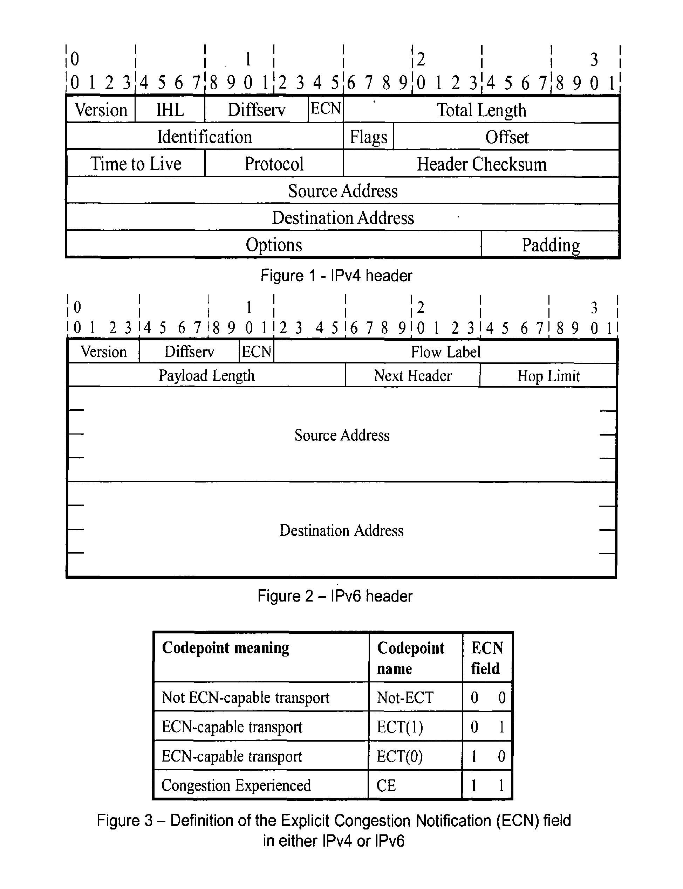

Explicit Congestion Notification (ECN) [RFC3168] conveys congestion in TCP/IP networks by means of two-bit ECN field in the IP header, whether in IPv4 (see **Figure 1)** and IPv6 (see **Figure 2**). Prior to the introduction of ECN, these two bits were present in both types of IP header, but always set to zero. Therefore, if these bits are both zero, a queue management process assumes that the packet comes from a transport protocol on the end-systems that will not understand the ECN protocol so it only uses drop, not ECN, to signal congestion.

The meaning of all four combinations of the two ECN bits is shown in **Figure 3**. If either bit is one, it tells a queue management process that the packet has come from an ECN-capable transport (ECT) that will understand ECN marking, as well as drop, as a signal of congestion.

When a queue management process detects congestion, for packets with a non-zero ECN field, it sets the ECN field to the Congestion Experienced (CE) codepoint. On receipt of such a marked packet, a TCP receiver sets the Echo Congestion Experienced (ECE) flag in the TCP header, which the TCP source interprets as if the packet has been dropped for the purpose of its rate control.

Drop and congestion signals are not mutually exclusive signals, and flows that enable ECN have the potential to detect and respond to both signals.

As well as the idea of ECN being adopted in IP, it was previously adopted in Frame Relay and ATM, but in these latter two protocols the network arranges feedback of the congestion signals internally, and the network enforces traffic limits to prevent congestion build-up [ITU-T Rec.I.371]. When a cell arriving at a switch causes a congestion threshold to be exceeded, then its EFCI bit is set.

The IEEE has standardised an explicit congestion approach where Ethernet switches not the end systems arrange to feedback the congestion signals, although the Ethernet device on the sending system is expected to co-operate by reducing its rate in response to the signals. The approach is tailored exclusively for homogeneous data centre environments.

In previous approaches, each frame (or packet) carried just a binary flag and the strength of the congestion signal depended on the proportion of marked frames - effectively a unary encoding of the congestion signal in a stream of zeroes and ones. However, the IEEE scheme signals a multi-bit level of congestion in each feedback frame, hence its name: Quantised Congestion Notification or QCN [IEEE802.1 Qau].

Random Early Detection (RED)

Historically, routers would drop packets when they got completely saturated (i.e. when a traffic burst cannot be accommodated in the buffer of the router) - this policy is called drop-tail. Random early detection (RED) [RED] is an improvement intended to desynchronise TCP flows (synchronisation occurs when multiple TCP flows increase and decrease their transmission window at the same time). RED is an active queue management (AQM) process that monitors the average queue length in a buffer and when this is higher than a given threshold, the router starts to drop/mark packets with a probability which increases with the excess length of the averaged queue over the threshold. RED is widely used in today's Internet because it allows sources to react more promptly to incipient congestion and it keeps queues from growing unnecessarily long. Equipment vendors have implemented variants of RED, e.g. Cisco' proprietary implementation is Weighted Random Early Detection (WRED). However, it is well known that RED is very sensitive to parameter setting.

In the course of experimental work to investigate the sensitivity of RED to its parameter settings, the timescale over which RED averaged the queue was investigated, and in one case at least averaging was turned off completely, instead using the instantaneous queue [RED-params].

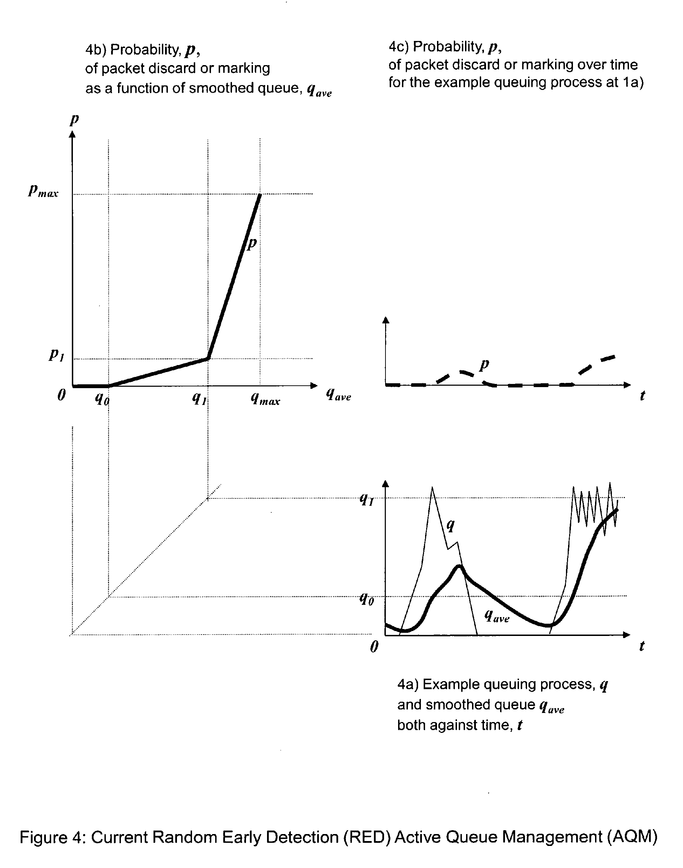

The use of an Active Queue Management (AQM) technique using Random Early Detection (RED) will be described with reference to **Figure 4**.

RED randomly drops/marks packets with a probability p that depends upon the smoothed queue $q_{ave}$. In a RED-based AQM, a smoothed queue $q_{ave}$ is continuously estimated by means of an exponential weighted moving average (EWMA) of the real queue q:

$$q_{ave} \leftarrow (1-w_q)\, q_{ave} + w_q$$

where $w_q$ is the weight given to the real queue's length; see Figure 4a) for an example of real queue versus smoothed queue evolution over time.

When the smoothed queue size $q_{ave}$ is below a minimum threshold $q_0$ then no packets are dropped/marked. When $q_{ave}$ is between $q_0$ and $q_1$ then packets are discarded with a probability p, between 0 and $p_1$, that is linearly proportional to $q_{ave}$. When $q_{ave}$ is greater than threshold $q_1$ then probabilistic drop/mark continues with an increased probability ranging between $p_1$ and $p_{max}$, which still depends linearly on $q_{ave}$. This is also known as the Gentle variant of RED algorithm [GRED] (see Figure 4b)). Its behaviour differs from the original RED between $q_1$ and $q_{max}$: while GRED drops/marks packets with a probability which depends linearly upon smoothed queue length with a maximum probability $p_{max}$, in such interval RED marks with a maximum probability $p_{max}$. See Figure 4c) for an example of time evolution of packet drop/mark probability. Assuming the sources of packet load are responsive to congestion, it can be seen that a period of drops/marks p>0 results in senders slowing down, which results in reduced queue length and hence no drop/mark p=0; subsequently senders increase their transmission rate which results in an increased queue length, note that it takes some time before p>0 again because of the queue length smoothing.

Random Exponential Marking (REM)

Whereas with RED congestion notification depends upon the average queue length, with the REM [REM] AQM, congestion signals depend on rate deviation (i.e. queue growth over a period) and queue deviation (i.e. difference between queue length and target queue length).

The queue is sampled periodically. Therefore between samples the congestion signal depends on a delayed rather than instantaneous measure of the queue. The probability of marking/dropping in the REM AQM is characterised by an exponential as opposed to a piecewise linear function used by RED, and similarly to RED congestion feedback can either be by drop or ECN marking. The exponential function in REM ensures that the signals accumulated along a path are precisely summed to signal end-to-end congestion to the source.

BLUE

BLUE [BLUE] is an AQM designed to overcome the inefficiencies that arise in the presence of bursty traffic and AQMs based on a smoothed queue such as RED. With bursty traffic, queue length often oscillates wildly and RED-like AQMs that drop based on smoothed queue length are unable to react sufficiently quickly. BLUE maintains a probability of packet marking or dropping which is based on actual queue occupancy hence, congestion notification (drop or ECN-mark) depends upon actual queue length and not smoothed queue length. This marking probability is increased when packets are being dropped and is decreased when there is less congestion.

Proportional-integral (PI)

Proportional-integral [PI] controllers are controllers based on feedback control theory which perform AQM functions. Like BLUE, a key feature of the PI controller is to use the instantaneous queue size not an averaged queue length to determine marking and/or loss probability, in order to minimise delay of the feedback signal.

RED in a different light (nRED)

nRED is a self-configuring variant of RED which is available online [nRED] but has not been published in peer reviewed journals or conferences. This AQM estimates the persistent queue, which differs from the smoothed-RED queue as it only seeks to track persistent buffer occupancy that has not cleared within a given time interval. This is achieved by means of a filtered function of the instantaneous queue length. It compares the instantaneous queue to the filtered value and, if it is greater, the filtered function rises using the same exponentially weighted moving average as RED, but if it is less, the filtered value tracks the instantaneous queue downwards.

Sample Path Shadow Pricing (SPSP)

Sample Path Shadow Pricing (SPSP) [GI99] is a scheme which prescribes to mark packets that cause the unsmoothed queue to exceed a threshold and then lead to buffer overflow.
This is unattainable in practice, as a packet may have left the queue by the time a decision is made that it should have been marked. However, it is used as a theoretical ideal e.g. to define the SPSP marking fairness principle, that is, a marking algorithm satisfies SPSP fairness if it marks the same number of packets that SPSP would have marked. SPSP purely concerns ECN marking and does not consider loss.

Pre-Congestion Notification (PCN)

The IETF pre-congestion notification (PCN) architecture is a framework that supports Quality of Service (QoS) of inelastic traffic within a DiffServ domain. Admission control (or flow termination) of inelastic traffic in a PCN-domain depends upon the marked PCN-traffic observed within the priority class reserved for PCN-traffic. PCN traffic can coexist with other traffic and receive different treatment within the queue. Two PCN marking algorithms have been standardised [PCN] based on the idea of virtual queue [GI99] which is a fictitious queue that emulates the behaviour of a real queue if it were draining at a slower rate that the actual link capacity.
The standardised PCN marking algorithms both use the instantaneous length of the virtual queue, not a smoothed queue length as with DEC-bit or RED. PCN uses the Not-ECT codepoint in the ECN field (Figure 3) in a similar way to ECN, in order to support a mixture of traffic sharing the same queue, some of which is capable of being PCN-marked and some not. Non-PCN traffic sharing a priority queue would be dropped rather than marked if it exceeded the policed rate of the priority queue.

Congestion Control for high Bandwidth-Delay-Product (BDP) networks

Traditional TCP/IP congestion control and recovery mechanics can be detrimental to the performance of delay sensitive applications. This is particularly problematic for high Bandwidth-Delay-Product (BDP) networks (also known as Long Fat Networks (LFN)). The literature on congestion control improvements for LFN is vast. It will not be covered further here, given the focus on AQM mechanisms in queues rather than congestion control algorithms in end-systems.

Reach Overload, Send ECN (ROSE)

The ROSE algorithm [WI99] is a queue marking variant of RED [RED] designed to improve its fairness while scaling to large networks. This is achieved by marking all packets whenever the queue size exceeds a threshold b and dynamically adapting b as follows:

- if a packet would have been marked by SPSP, then decrease b, i.e. such that $b \leftarrow b - \kappa\epsilon$;
- when a packet is marked then increase b, i.e. such that $b \leftarrow b + \epsilon$;

where $\kappa$ is a variable that indicates how many marks are equivalent to a drop (1 or more), and $\epsilon$ is an infinitesimally

small variable. This algorithm which is based on actual queue length has been shown to be fair to flows as it marks packets proportionally to the congestion they cause.

ROSE is particularly relevant because it starts from the premise that an ECN mark need not be equivalent to a drop, instead the two being linearly related through the parameter $\kappa$. However, ROSE is a theoretical demonstration of a point, rather than a concrete algorithm proposal, so it does not actually specify the algorithm that should be used to drop packets rather than mark them, although perhaps it is implied that ROSE would be used with $\kappa = 1$.

Mark and drop signals

As discussed in [open-ECN], the ECN specification for TCP/IP [RFC3168] stipulates that a packet should only be congestion marked if it would have been dropped, were it unmarkable. It is even stipulated that this assumption should be embedded in implementations, by stating that the ECT flag should only be checked after the decision has been made to drop a packet. Exactly mimicking drop behaviour is motivated by the need to provide incentives for hosts to switch to ECN capability when competing with unmarkable flows.

The [open-ECN] report was an openly published review of the ECN specification during its progress along the IETF's standards track. It agrees with the ECN specification that one ECN mark needs to be equivalent to one drop, but only within the best efforts service, for incremental deployment reasons. For other service disciplines than best efforts, it takes the position of Wischik [WI99] that one ECN mark need not be equivalent to one drop.

Data Centre TCP

Data-centre TCP (DCTCP), proposed by Alizadeh Attar et al. [ALI10] and also discussed in US patent application US2011/0211449 (Attar et al) has shown the considerable benefit of signalling congestion based on the instantaneous length of the queue rather than signalling congestion dependent on a moving average of the queue length. As a result, DCTCP keeps buffers nearly empty nearly all the time, resulting in very low and very predictable delay and extremely low loss-rates, both of which lead to significantly superior performance.

DCTCP is an enhancement of TCP aimed at meeting the requirements of the applications running in data centres, so as to simultaneously achieve high throughput and burst tolerance as well as low latency. It relies on the usage of Explicit Congestion Notification [RFC3168]. The analysis of traffic patterns within Microsoft data centres have shown that even in the absence of the smoothing effects arising from multiplexing, DCTCP can achieve low queuing delay with low variance. DCTCP departs from earlier proposals by prescribing changes both at the senders and within network switches, which can be arranged to be deployed within a data centre where a single entity administers both:

- Switch-side: the AQM in switches signals congestion by ECN marking packets based on instantaneous buffer length (i.e. no queue smoothing is carried out in switches as for example in RED). If the queue is greater than a threshold then it marks packets, otherwise it doesn't mark. This can be implemented with a RED AQM in commodity switches with a suitable choice of threshold parameters and the queue averaging parameter set to 1, which effectively turns off averaging.

- Sender-side: it reacts to every congestion indication in proportion to congestion levels, i.e. the greater the number of ECN marks observed the greater the reduction in congestion window, cwnd. The algorithm maintains average $\alpha$ of fraction F of packets marked in each RTT as follows:

$$F = \text{(Number of marked ACKs)/(Total ACKs)}$$
$$\alpha \leftarrow (1 - g)\, \alpha + g\, F \text{ (where } 0 < g < 1 \text{ weight given to new samples)}$$
$$\text{Cwnd} \leftarrow (1 - \alpha/2)\, \text{Cwnd}$$

DCTCP does not specify what the AQM should do for packets that do not support ECN, because ECN support is enabled by construction of the scheme throughout the data centre.

Phantom queue

The phantom queue [PR11] is aimed at achieving ultra-low latency solutions, particularly in data centres. The aim is to remove buffering delay from the data centre forwarding fabric by using a virtual queue on the switch (similar to PCN [PCN]) in combination with DCTCP [ALI10] on the end-systems.

Other Techniques

US patent application US2003/0088690 (Zuckerman et al) relates to an AQM process which splits ECN and non-ECN packets into separate queues, then treats them differently. When congestion rises, the rate of ECN-marking on ECN-capable packets is increased. For non-ECN-capable packets, delay is introduced as an alternative to increasing loss.

References

[ALI10]: M. Alizadeh et al. "DCTCP: Efficient Packet Transport for the Commoditized Data Center", Microsoft Technical Report (January 2010).

[BLUE]: W. Feng, D. Kandlur, D. Saha and K. Shin " BLUE: a new class of active queue management algorithms. Technical report CSE-TR-387-99, University of Michigan.

[GI99]: R. Gibbens and F. Kelly, "Resource pricing and the evolution of congestion control", Automatica, 35, 1999.

[GRED]: S. Floyd. (March 2000). Recommendation on using the "gentle" variant of RED. [Online]. Available: http://www.icir.org/floyd/red/gentle.html.

[IEEE802.1Qau]: "IEEE Standard for Local and Metropolitan Area Networks---Virtual Bridged Local Area Networks - Amendment: 10: Congestion Notification," IEEE Draft standard 802.1Qau Draft 2.4 (2006) Abstract URL: http://www.ieee802.org/1/pages/802.1au.html

[ITU-T Rec. I.371]: "Traffic Control and Congestion Control in B-ISDN," ITU-T Recommendation I.371 (03/04) (March 2004) <http://www.itu.int/rec/recommendation.asp?type=folders(=e&parent=T-REC-I.371>

[nRED]: V. Jacobson et al. "RED in a different light" Available online: http://www.cnaf.infn.it/~ferrari/papers/ispn/red_light_9_30.pdf

[PCN]: P. Eardley, "Metering and Marking Behaviour of PCN-Nodes" IETF RFC 5670 (Nov 2009)

[PI]: Hollot, C.V., Misra, V., Towsley, D.F. & Gong, W., "On Designing Improved Controllers for AQM Routers Supporting TCP Flows," In: INFOCOM pp. 1726-1734 (2001

[RED-params]: Influence of Active Queue Management Parameters on Aggregate Traffic Performance Martin May, Christophe Diot, Bryan Lyles, Jean Bolot, INRIA Research Report 3995, Sophia Antipolis, France, 2000

[RAN90a]: K. K. Ramakrishnan and R. Jain. A Binary Feedback Scheme for Congestion Avoidance in Computer Networks. ACM Transactions on Computer Systems, Feb 1990

[RED]: S. Floyd, and V. Jacobson, Random Early Detection gateways for Congestion Avoidance, IEEE/ACM Transactions on Networking, Vol 1-4 (397-413) Aug 1993

[REM]: S. Athuraliya et al. "REM: active queue management" IEEE Network, 15, 3, 2001.

[RFC3168]: Ramakrishnan, K.K., Floyd, S. & Black, D., "The Addition of Explicit Congestion Notification (ECN) to IP," Internet Engineering Task Force Request for comments 3168 (September 2001)

[WI99]: D. Wischik, Large Deviations and Internet Congestion, PhD Dissertation, University of Cambridge (Sept. 1999).

[open-ECN]: B. Briscoe, J. Crowcroft, An Open ECN Service in the IP layer, IETF Internet Draft- draft-ietf-tsvwg-ecn-ip-00

[PR11]: B. Prabhakar et al. "Buffers: The great boon and bane of packet switching", Plenary talk (2011): http://forum.stanford.edu/events/20111slides/plenary/2011plenaryPrabhakar.pdf

## Summary of the Invention

DCTCP was so-called because the only place where it seemed safe to deploy it was in the confines of a data centre. DCTCP uses radically different algorithms to those used currently on the Internet, both different at the sender and different in network buffers. However, unless all the algorithms at every host and every network node are changed at the same time, DCTCP interacts badly with the algorithms used on the existing Internet. Nonetheless, it is feasible for all the algorithms in a data centre to be changed simultaneously because they are under the control of one operator, which is how DCTCP has been deployed so far.

The present inventors have identified a change in the manner in which congestion is signalled may be used to enable the superior performance of DCTCP (or a similar radically improved set of algorithms) to be deployed incrementally in pre-existing TCP/IP networks.

As will be explained in more detail below, preferred embodiments of the invention may be applied in relation to a queuing process on a network node to signal congestion such that, when signalling congestion in packets that are capable of explicit congestion notification, ECN signals are based on the instantaneous length of its queue, while for those packets that are not ECN-capable, loss signals are based on a smoothed average of its queue length.

Until now, nearly all queue management algorithms, whether proposed or in production, have used a smoothed average of the queue length. Only a few (including DCTCP) use the instantaneous queue length. But whichever choice they make, they always make the same choice for both ECN-capable and non-ECN-capable packets. According to preferred embodiments of the invention, the use of instantaneous queue length may be associated with the introduction of ECN on network nodes.

Brief Explanation

A pre-requisite for DCTCP is universal deployment of explicit congestion notification (ECN). However much of the Internet does not yet support ECN, evidenced by the large majority of packets indicating that they are not ECN-capable.

Traditionally, the process that manages a queue on an IP forwarding node is meant to signal congestion equivalently, whether or not a particular packet is capable of carrying an explicit congestion notification (ECN). For instance, if the queuing process starts probabilistically indicating congestion when the queue length exceeds a certain threshold, the threshold for marking ECN-capable packets must be the same as the threshold for discarding non-ECN-capable packets.

This equivalence is mandated in the ECN standard [RFC3168] because if it were otherwise it has always been thought that non-ECN packets would starve ECN packets. For instance, consider what would happen if the threshold for ECN marking were shallower than the threshold for packet loss. If the queue length reaches the drop threshold it will already have exceeded the ECN threshold. Therefore any ECN-capable packets will be marked with high probability, while non-ECN-capable packets will only just start being dropped.

Non-ECN flows will drive up the queue until it gives drop signals, which make them back off then increase again, so that on average they will hover around the drop threshold. Any ECN-capable flows sharing the same queue will then see nearly 100% ECN marking, so they will back off. But the ECN marking will not go away because the non-ECN flows will simply fill the queue in their place, trying to push the queue to the deeper drop threshold. Therefore the ECN flows will ratchet down and the non-ECN flows will ratchet up, quickly starving the ECN-flows out of the system.

With preferred versions of the proposed method, the thresholds for ECN and non-ECN packets may be the same, so one cannot starve the other. The difference is in the characterisation of the queue length that is compared against the threshold:

- For non-ECN packets a smoothed queue length is compared. Then the buffer can absorb a burst and, if the moving average hasn't reached the threshold before the burst is over, no packets will be dropped.

- For ECN packets, the instantaneous queue length is compared, because ECN packets in a burst can all be marked, which gives an instant signal without having to drop anything.

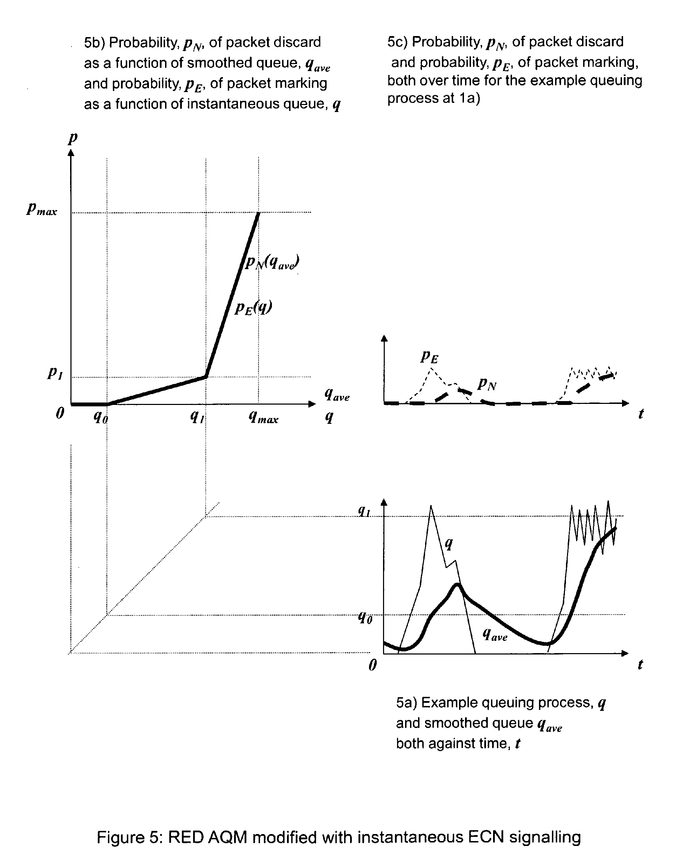

Even though the congestion signalling algorithms for the two types of packet are based on different metrics, neither type of packet can starve the other. In the early stages of queue growth, ECN packets will experience more congestion signalling. However, the longer that non-ECN packets attempt to take advantage of this position, the more their advantage will disappear as the smoothed average queue length catches up with the instantaneous queue length. This will be discussed in more detail later with reference to **Figure 5**.

ECN and instantaneous congestion signalling are the two desirable features characterising DCTCP from an AQM's point of view. By protecting packets that use these features against starvation, it becomes feasible to incrementally deploy these two changes into pre-existing networks.

For non-ECN packets, it is generally important that congestion loss is based on smoothed, rather than instantaneous, queue length. It is desirable to set a shallow threshold for ECN marking in order to keep queuing delay low. In order to prevent starvation, this implies that the threshold for non-ECN packets must be equally shallow. If the dropping algorithm did not smooth the queue length, non-ECN packets would be faced with just a very short buffer, resulting in either low utilisation or high loss rates. Whereas, by using a smoothed queue length, bursts of non-ECN packets can exceed the threshold without being dropped, as long as they do not persist long enough for the average queue length to catch up.

Moving, not Removing the Smoothing Function

From examining Figure 5, it may seem that the process based on the smoothed queue generates fewer congestion signals than the process based on the instantaneous queue, because the smoothed queue stays below the lower threshold, $q_0$, for more of the time. This does not need to be problematic because, although the ECN signals are not smoothed when they are generated, they can be smoothed when they are consumed at the sender (or receiver). At this point, bursts of signalling can similarly be filtered out, but with respect to the actual round trip time of the end-system, not some compromise round trip time assumed by the network.

This is how DCTCP achieves its advantage, because each host can smooth over a duration matching its own feedback delay. Whereas a queue in the network cannot easily know the round trip time of each flow, so it has to smooth over some compromise duration between the fastest and slowest feedback delays of different hosts.

In the DCTCP approach, hosts with extremely short feedback delay can smooth out bursts shorter than their own delay, but they can still respond extremely rapidly to fluctuations in the queue that persist beyond this. Then they can trim peaks and fill troughs using the instant feedback from the queue.

In contrast, if the signal is smoothed in the network using some average feedback delay, any flows with much shorter-than-average feedback delay loops only get a signal that the queue length has changed many round trip times after they could usefully have responded to it.

To put this in perspective, some flows traversing a queue in an access network will be coming from a cache a couple of milliseconds away, while others will come from other continents, hundreds of milliseconds away. Queue management algorithms generally smooth over tens of milliseconds as a compromise, which means that the short round trip flows get congestion signals ten or so round trips after they could first have responded.

To summarise, preferred embodiments of the invention provide ways to incrementally deploy a shift of the function that smoothes congestion signals from the network to end-systems. This is advantageous because end-systems know their own feedback loop delay and can therefore filter out bursts on the correct timescale. In the present network-based approach, the network does not have the necessary delay information about each flow, so it will frequently filter out bursts it should have left and leave in bursts it should have filtered.

According to a first aspect of the present invention, there is provided a method of signalling congestion being caused by data items received at a network element in a communications network, the network element having a queue having a length, the method comprising steps of:

identifying, in respect of each of a plurality of received data items, whether or not said data item is capable of carrying a congestion indication;

determining a first queue length characterisation, said first queue length characterisation being determined according to a first function such as to depend on measurements of the length of the queue at a plurality of different times;

determining a second queue length characterisation, said second queue length characterisation being determined according to a second function such as to depend on a current or recent measurement of the length of the queue, the most recent queue length being more strongly weighted in said second function than it is in said first function;

applying a sanction in respect of data items identified as not being capable of carrying congestion indications with a probability dependent on said first queue length characterisation; and

assigning congestion indications to data items identified as being capable of carrying congestion indications in dependence on said second queue length characterisation.

The assigning step may involve assigning congestion indications to the data items with a probability dependent on said second queue length characterisation, and otherwise not assigning congestion indications to them. This may be the case where the congestion indications are ECN marks. Alternatively the assigning step may involve assigning congestion indications such as multi-bit congestion indications to the data items, in which case the indications themselves may depend on the second queue length characterisation

By virtue of the second function weighting the most recent queue length more strongly than the first function, the first and second functions may be chosen such as to ensure that the second queue length characterisation depends to a greater extent than the first queue length characterisation on the most recent measurement of the length of the queue.

According to preferred embodiments, the first function is chosen such that the first queue length characterisation is determined as a moving average, preferably a weighted moving average, of the length of the queue at a plurality of different times. By virtue of a weighted moving average of the length of the queue, the first function may ensure that greater weight is given to more recent measurements of the length of the queue than to less recent measurements of the length of the queue. Preferably, the first queue length characterisation is determined as an exponentially-weighted moving average of the length of the queue.

According to preferred embodiments, the second function is chosen such that the second queue length characterisation is the current or most recent queue length, or is indicative thereof. In this regard, it essentially gives full weighting to the most recent queue length, and can be, or be substantially equivalent to, an instantaneous measurement of queue length.

Alternatively, instead of being dependent just on the most recent queue length, the second function may be chosen such that the second queue length characterisation is determined as a weighted moving average of the length of the queue at a plurality of different times, in which case the second function should give sufficient weight to the most recent measurement of the length of the queue as to be indicative of current queue length. It is thus possible that both the first and second functions may use moving averages.

According to preferred embodiments, the length of the queue at a particular time is indicative of the size of a backlog of data items requiring processing and/or forwarding by the network element at that time.

According to preferred embodiments, the step of applying a sanction in respect of data items identified as not being capable of carrying congestion indications may comprise performing one or more of the following actions in respect of one or more of said data items with a probability dependent on said first queue length characterisation: dropping; truncating; delaying; de-prioritising; re-routing; forwarding to a destination other than an intended destination; issuing an out-of-band congestion notification.

According to preferred embodiments, the method may further comprise forwarding respective data items identified as not being capable of carrying congestion indications to an intended destination thereof in the event that no sanction is applied in respect thereof.

According to preferred embodiments, the method may further comprise forwarding respective data items identified as being capable of carrying congestion indications to an intended destination, said data items to which congestion indications have been assigned carrying those congestion indications.

According to preferred embodiments, the identifying step may comprises identifying, in respect of said data items, whether or not they are capable of carrying an Explicit Congestion Notification indication.

According to a second aspect of the present invention, there is provided apparatus operable to perform a method according to any of the preceding claims. Such apparatus may be a network element performing the method in respect of itself, or may be a separate device performing the method on behalf of the network element.

The various options and preferred embodiments referred to above in relation to the first aspect are also applicable in relation to the second aspect.

## Brief Description of the Drawings

A preferred embodiment of the present invention will now be described with reference to the appended drawings, in which:

**Figure 1** shows the layout and names of the fields of an IPv4 header;

**Figure 2** shows the layout and names of the fields of an IPv6 header;

**Figure 3** indicates the meanings of the four codepoints available using the two ECN bits in the ECN field of an IPv4 header or an IPv6 header;

**Figure 4** illustrates the outcome of an Active Queue Management (AQM) technique using Random Early Detection (RED);

**Figure 5** illustrates the possible outcome of an RED AQM technique modified to use instantaneous ECN signalling;

**Figure 6** illustrates the possible outcome of a threshold AQM technique modified to use instantaneous ECN signalling;

**Figure 7** is a flow diagram illustrating an AQM technique with smoothed loss signalling but instantaneous ECN signalling, according to a preferred embodiment; and

**Figure 8** illustrates entities that may be involved in conveying data items along a path across one or more networks.

## Description of Preferred Embodiments of the Invention

With reference to the accompanying figures, methods of signalling congestion according to a preferred embodiment will be described with reference to Figures 5, 6, 7 and 8.

An RED AQM technique modified to use instantaneous ECN signalling will now be described with reference to **Figure 5**. The same example queuing process is illustrated in Figure 5a) as was used in Figure 4a).

The active queue management (AQM) algorithm in Figure 5b) shows the dependence of ECN marking probability, $p_E$, on the instantaneous queue, $q$, and the dependence of drop probability, $p_N$, on the smoothed queue, $q_{ave}$. In Figure 5b) the two functions appear visually indistinguishable from the original RED algorithm in Figure 4b) and indistinguishable from each other, being exactly overlaid on each other. However, the metric that each depends on from the horizontal axis is different, which is apparent from the parameter that each depends on in the function notation $p_E(q)$ and $p_N(q_{ave})$. This difference is illustrated in Figure 4c), where the ECN marking probability, $p_E$, more faithfully tracks the instantaneous queue length, $q$, while it is lagged by the more sluggish movements in drop probability, $p_N$, that track the smoothed queue length, $q_{ave}$, which is inherently delayed by the smoothing process.

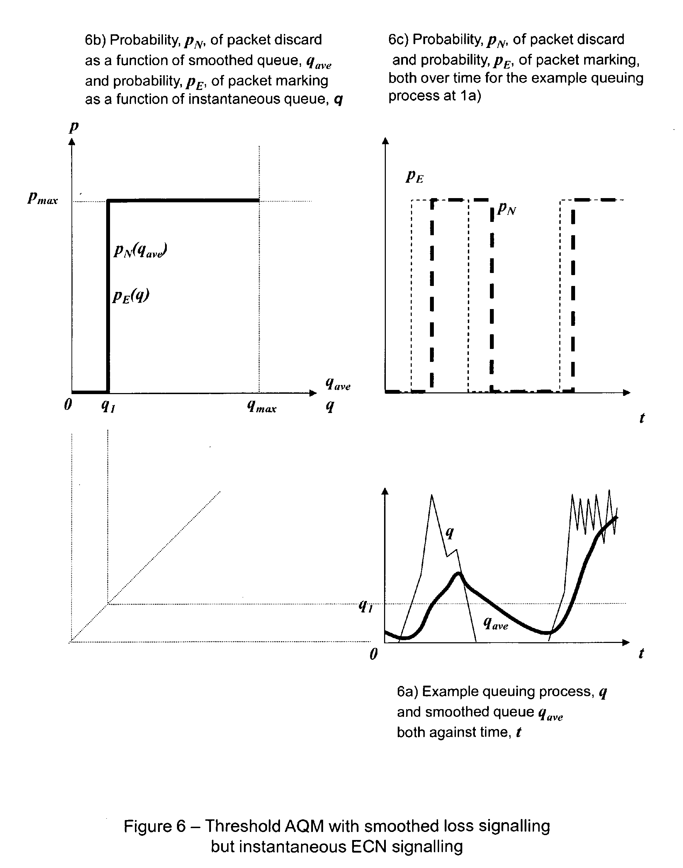

A threshold AQM technique modified to use instantaneous ECN signalling will now be described with reference to **Figure 6**. The shape of the congestion notification probability function in Figure 6b) is a simple step threshold as used in DCTCP, rather than the piecewise linear function of Gentle RED in Figure 5b). Nonetheless, despite the difference in shape of function, drop probability is still dependent on the smoothed queue, and ECN marking probability is still dependent on the instantaneous queue, as in the technique described with reference to Figure 5. Again, the rises and falls of drop probability lag those of ECN marking probability, as illustrated in Figure 6c).

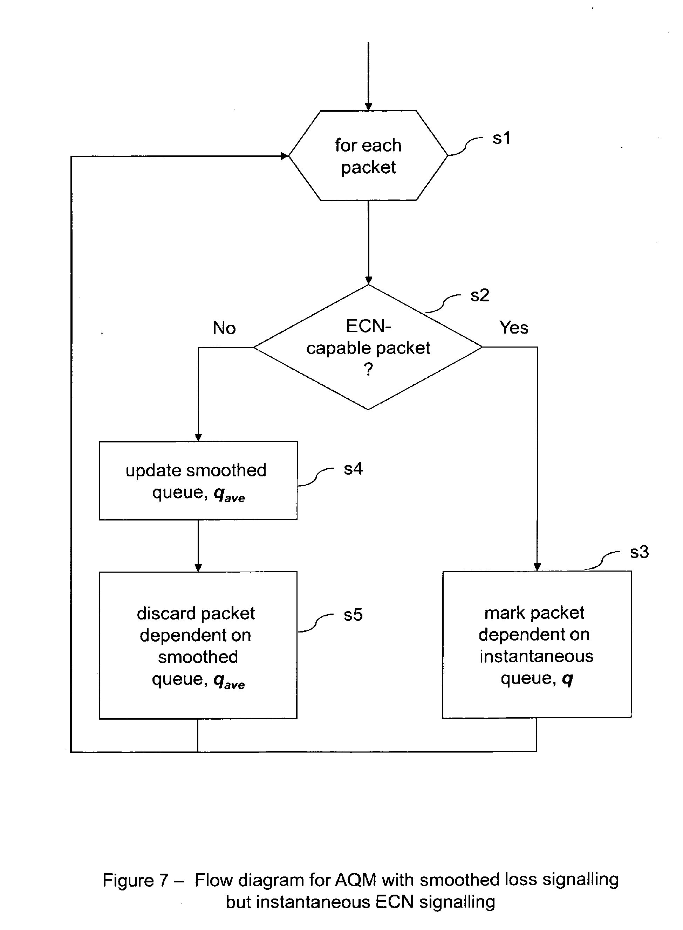

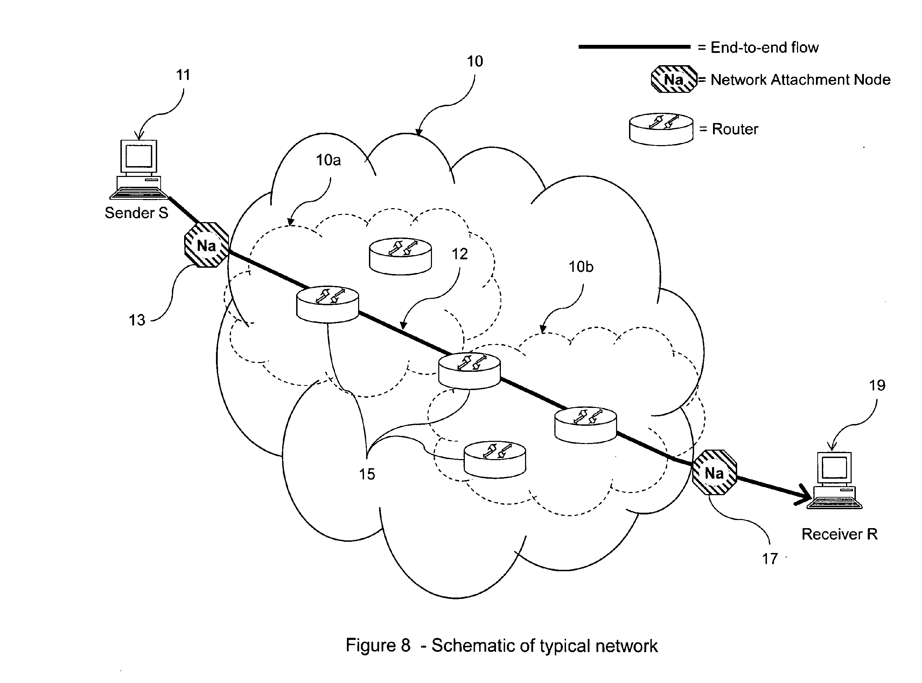

**Figure 7** is a flow diagram illustrating an AQM technique with smoothed loss signalling but instantaneous ECN signalling, according to a preferred embodiment, which highlights the difference in processing between ECN-capable and non-ECN-capable packets received by a network element such as a router in a network. Such a technique may be performed by a network element such as one of the intermediate "forwarding" routers 15 shown in Figure 8, or by one of the other nodes or devices 11, 13, 17, 19 which will be explained below. For each packet received by the network element (indicated by block s1), the network element determines (s2) whether the packet is ECN-capable or not.

If the packet is ECN-capable, the packet may be marked with an ECN congestion mark, the probability of marking being dependent on the current or otherwise most recent measurement of the instantaneous queue length, *q,* and may then be forwarded on towards its intended destination carrying the congestion mark. The proportion of packets that reach the destination carrying congestion marks serves as an explicit indication of the level of congestion at routers on the path taken by the packets.

If the packet is not ECN-capable, as it cannot carry an ECN congestion mark, it may instead be dropped. In order to allow this, the smoothed queue length, $q_{ave}$, is updated (s4), then the packet may be dropped with a probability dependent on the updated smoothed queue length, $q_{ave}$ (s5). The proportion of packets that fail to reach the intended destination may this serve as an implicit indication of the level of congestion at routers on the path taken by the packets. it will be noted that with non ECN-capable packets, packets need not be dropped to signal congestion - they may instead be forwarded having had a sanction applied thereto such as stripping of their payload, or may be forwarded to a destination other than their intended destination, for example.

**Figure 8** illustrates entities that may be involved in conveying data items along a path between two computers or other such devices, which will be referred to as a "Sender S" 11 and a "Receiver R" 19, connected via a network 10 with several intermediate routers 15. Sender S may simply be acting as a sender of data along end-to-end path 12, with Receiver R simply acting as a receiver of that data, but it will be understood that both computers may in fact be performing both the sending and the receiving functions.

Sender S is connected to the network 10 through Network Attachment Node 13 and Receiver R is connected to the network through Network Attachment Node 17. Feedback data such as congestion information relating to data that Receiver R has received from Sender S may be provided from Receiver R to Sender S via network attachment nodes 17, 13 and intermediate nodes 15, or via alternative routes through network 10 or otherwise.

There may be a plurality of interconnected networks 10a, 10b, etc. (shown using dashed lines) between Sender S and Receiver R, possibly of different types or operated by different network providers or other entities, rather than a single, homogenous, uniformly-controlled network.

**Claims**

1. A method of signalling congestion being caused by data items received at a network element in a communications network, the network element having a queue having a length, the method comprising steps of:

    identifying, in respect of each of a plurality of received data items, whether or not said data item is capable of carrying a congestion indication;

determining a first queue length characterisation, said first queue length characterisation being determined according to a first function such as to depend on measurements of the length of the queue at a plurality of different times;
determining a second queue length characterisation, said second queue length characterisation being determined according to a second function such as to depend on a current or recent measurement of the length of the queue, the most recent queue length being more strongly weighted in said second function than it is in said first function;
applying a sanction in respect of data items identified as not being capable of carrying congestion indications with a probability dependent on said first queue length characterisation; and
assigning congestion indications to data items identified as being capable of carrying congestion indications in dependence on said second queue length characterisation.

2. A method of signalling congestion according to claim 1 wherein said first and second functions are such that the second queue length characterisation depends to a greater extent than said first queue length characterisation on the most recent measurement of the length of the queue.

3. A method of signalling congestion according to claim 1 wherein said first and second functions are such that the first queue length characterisation depends to a greater extent than said second queue length characterisation on one or more previous measurements of the length of the queue.

4. A method of signalling congestion according to any of the preceding claims, wherein said first function is such that the first queue length characterisation is determined as a moving average of the length of the queue at a plurality of different times.

5. A method of signalling congestion according to claim 4 wherein the first queue length characterisation is determined as a weighted moving average of the length of the queue, the first function being such that greater weight is given to more recent measurements of the length of the queue.

6. A method of signalling congestion according to claim 5 wherein the first queue length characterisation is determined as an exponentially-weighted moving average of the length of the queue.

7. A method of signalling congestion according to any of the preceding claims, wherein said second function is such that the second queue length characterisation is the current or most recent queue length, or is indicative thereof.

8. A method of signalling congestion according to any of the preceding claims, wherein said second function is such that the second queue length characterisation is determined as a weighted moving average of the length of the queue at a plurality of different times, the second function giving sufficient weight to the most recent measurement of the length of the queue as to be indicative of current queue length.

9. A method of signalling congestion according to any of the preceding claims, wherein the length of the queue at a particular time is indicative of the size of a backlog of data items requiring processing and/or forwarding by the network element at that time.

10. A method of signalling congestion according to any of the preceding claims, wherein the step of applying a sanction in respect of data items identified as not being capable of carrying congestion indications comprises performing one or more of the following actions in respect of one or more of said data items with a probability dependent on said first queue length characterisation: dropping; truncating; delaying; de-prioritising; re-routing; forwarding to a destination other than an intended destination; issuing an out-of-band congestion notification.

11. A method of signalling congestion according to any of the preceding claims, the method further comprising forwarding respective data items identified as not being capable of carrying congestion indications to an intended destination thereof in the event that no sanction is applied in respect thereof.

12. A method of signalling congestion according to any of the preceding claims, the method further comprising forwarding respective data items identified as being capable of carrying congestion indications to an intended destination, said data items to which congestion indications have been assigned carrying those congestion indications.

13. A method of signalling congestion according to any of the preceding claims, wherein the step of identifying comprises identifying, in respect of said data items, whether or not they are capable of carrying an Explicit Congestion Notification indication.

14. A method of signalling congestion being caused by data items received at a network element in a communications network, the network element having a queue having a length, the method comprising steps of:

identifying, in respect of each of a plurality of received data items, whether or not said data item is capable of carrying a congestion indication;
determining a first queue length characterisation, said first queue length characterisation being determined according to a first function such as to depend on measurements of the length of the queue at a plurality of different times;
determining a second queue length characterisation, said second queue length characterisation being determined according to a second function such as to depend on a current or recent measurement of the length of the queue;
applying a sanction in respect of data items identified as not being capable of carrying congestion indications with a probability dependent on said first queue length characterisation; and
assigning congestion indications to data items identified as being capable of carrying congestion indications in dependence on said second queue length characterisation;

wherein said first and second functions are such that the second queue length characterisation depends to a greater extent than said first queue length characterisation on the most recent measurement of the length of the queue.

15. Apparatus operable to perform a method according to any of the preceding claims.

```
|0            |         |    1  |          |    |2   |        |     3   |
|0 1 2 3|4 5 6 7|8 9 0 1|2 3 4 5|6 7 8 9|0 1 2 3|4 5 6 7|8 9 0 1|
```

| Version | IHL | Diffserv | ECN | Total Length | | | |
| Identification | | | Flags | Offset | | | |
| Time to Live | | Protocol | | Header Checksum | | | |
| Source Address | | | | | | | |
| Destination Address | | | | | | | |
| Options | | | | | | Padding | |

Figure 1 - IPv4 header

```
|0            |         |    1  |          |    |2   |        |     3   |
|0 1 2 3|4 5 6 7|8 9 0 1|2 3 4 5|6 7 8 9|0 1 2 3|4 5 6 7|8 9 0 1|
```

| Version | Diffserv | ECN | Flow Label | | | |
| Payload Length | | | Next Header | | Hop Limit | |
| Source Address | | | | | | |
| Destination Address | | | | | | |

Figure 2 – IPv6 header

| Codepoint meaning | Codepoint name | ECN field | |
| --- | --- | --- | --- |
| Not ECN-capable transport | Not-ECT | 0 | 0 |
| ECN-capable transport | ECT(1) | 0 | 1 |
| ECN-capable transport | ECT(0) | 1 | 0 |
| Congestion Experienced | CE | 1 | 1 |

Figure 3 – Definition of the Explicit Congestion Notification (ECN) field
in either IPv4 or IPv6

4b) Probability, $p$,
of packet discard or marking
as a function of smoothed queue, $q_{ave}$

4c) Probability, $p$,
of packet discard or marking over time
for the example queuing process at 1a)

4a) Example queuing process, $q$
and smoothed queue $q_{ave}$
both against time, $t$

Figure 4: Current Random Early Detection (RED) Active Queue Management (AQM)

5b) Probability, $p_N$, of packet discard as a function of smoothed queue, $q_{ave}$ and probability, $p_E$, of packet marking as a function of instantaneous queue, $q$

5c) Probability, $p_N$, of packet discard and probability, $p_E$, of packet marking, both over time for the example queuing process at 1a)

5a) Example queuing process, $q$ and smoothed queue $q_{ave}$ both against time, $t$

Figure 5: RED AQM modified with instantaneous ECN signalling

6b) Probability, $p_N$, of packet discard
as a function of smoothed queue, $q_{ave}$
and probability, $p_E$, of packet marking
as a function of instantaneous queue, $q$

6c) Probability, $p_N$, of packet discard
and probability, $p_E$, of packet marking,
both over time for the example queuing
process at 1a)

6a) Example queuing process, $q$
and smoothed queue $q_{ave}$
both against time, $t$

Figure 6 – Threshold AQM with smoothed loss signalling
but instantaneous ECN signalling

for each
packet — s1

ECN-
capable packet
? — s2

No          Yes

update smoothed
queue, $q_{ave}$ — s4

discard packet
dependent on
smoothed
queue, $q_{ave}$ — s5

mark packet
dependent on
instantaneous
queue, $q$ — s3

Figure 7 – Flow diagram for AQM with smoothed loss signalling
but instantaneous ECN signalling

= End-to-end flow

= Network Attachment Node

= Router

Sender S

Receiver R

Figure 8 - Schematic of typical network

EP 2 637 371 A1

Europäisches
Patentamt

European
Patent Office

Office européen
des brevets

# EUROPEAN SEARCH REPORT

Application Number

EP 12 25 0053

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y,D | M. Alizadeh ET AL: "DCTCP: Efficient Packet Transport for the Commoditized Data Center", Proc. ACM SIGCOMM 2010 Conference on data communication, New Delhi, india, 1 August 2010 (2010-08-01), XP55027434, Retrieved from the Internet: URL:http://research.microsoft.com/pubs/121386/dctcp-public.pdf [retrieved on 2012-05-16] * page 1, line 1 - page 8, right-hand column, line 46; figure 10 * | 1-15 | INV. H04L12/56 |
| Y | OHSAKI H ET AL: "FI-RED: AQM Mechanism for Improving Fairness among TCP Connections in Tandem Networks", APPLICATIONS AND THE INTERNET, 2006. SAINT 2006. INTERNATIONAL SYMPOSI UM ON PHOENIX, AZ, USA 23-27 JAN. 2006, PISCATAWAY, NJ, USA,IEEE, LOS ALAMITOS, CA, USA, 23 January 2006 (2006-01-23), pages 63-70, XP010890117, DOI: 10.1109/SAINT.2006.33 ISBN: 978-0-7695-2508-2 * page 1, line 1 - page 5, left-hand column, line 18 * | 1-15 | |
| A,D | Martin May ET AL: "Influence of Active Queue Management Parameters on Aggregate Traffic Performance", Research Report 3995, 31 August 2000 (2000-08-31), XP55027469, Sophia Antipolis, France Retrieved from the Internet: URL:http://hal.inria.fr/docs/00/07/26/50/PDF/RR-3995.pdf [retrieved on 2012-05-16] * the whole document * | 1-15 | TECHNICAL FIELDS SEARCHED (IPC) H04L |

-/--

The present search report has been drawn up for all claims

| Place of search | Date of completion of the search | Examiner |
|---|---|---|
| Munich | 16 May 2012 | Lupia, Sergio |

EPO FORM 1503 03.82 (P04C01)

Europäisches
Patentamt

European
Patent Office

Office européen
des brevets

**EUROPEAN SEARCH REPORT**

Application Number

EP 12 25 0053

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | RAMAKRISHNAN TERAOPTIC NETWORKS S FLOYD ACIRI D BLACK EMC K: "The Addition of Explicit Congestion Notification (ECN) to IP; rfc3168.txt", 20010901, 1 September 2001 (2001-09-01), XP015008949, ISSN: 0000-0003 * the whole document * | 1-15 | |
| A | ----- CHONG P K ET AL: "A fair AQM scheme for aggregated ECN and non-ECN traffic", COMPUTER COMMUNICATIONS, ELSEVIER SCIENCE PUBLISHERS BV, AMSTERDAM, NL, vol. 27, no. 7, 1 May 2004 (2004-05-01), pages 589-603, XP004498807, ISSN: 0140-3664, DOI: 10.1016/J.COMCOM.2003.12.007 * page 589, line 1 - page 602, right-hand column, line 21 * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 16 May 2012 | Lupia, Sergio |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

...................................................................................

& : member of the same patent family, corresponding
document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20110211449 A, Attar
- US 20030088690 A, Zuckerman

### Non-patent literature cited in the description

- **W. FENG ; D. KANDLUR ; D. SAHA ; K. SHIN.** *BLUE: a new class of active queue management algorithms. Technical report CSE-TR-387-99*
- **R. GIBBENS ; F. KELLY.** Resource pricing and the evolution of congestion control. *Automatica,* 1999, 35
- **S. FLOYD.** *Recommendation on using the ''gentle,* March 2000, http://www.icir.org/floyd/red/gentle.html
- IEEE Standard for Local and Metropolitan Area Networks---Virtual Bridged Local Area Networks - Amendment: 10: Congestion Notification. *IEEE Draft standard 802.1Qau Draft 2.4,* 2006
- Traffic Control and Congestion Control in B-ISDN. *ITU-T Recommendation I.371,* 03 March 2004, <http://www.itu.int/rec/recommendation.asp?type=folders(=e&parent=T-REC-I.371>
- **V. JACOBSON et al.** *RED in a different light, http://www.cnaf.infn.it/&#8764;ferrari/papers/ispn/red_light_9_30.pdf*
- **P. EARDLEY.** Metering and Marking Behaviour of PCN-Nodes. *IETF RFC 5670,* November 2009
- **HOLLOT, C.V. ; MISRA, V. ; TOWSLEY, D.F. ; GONG, W.** On Designing Improved Controllers for AQM Routers Supporting TCP Flows. *INFOCOM,* 2001, 1726-1734
- **MARTIN MAY ; CHRISTOPHE DIOT ; BRYAN LYLES ; JEAN BOLOT.** Influence of Active Queue Management Parameters on Aggregate Traffic Performance. *INRIA Research Report 3995,* 2000
- **K. K. RAMAKRISHNAN ; R. JAIN.** A Binary Feedback Scheme for Congestion Avoidance in Computer Networks. *ACM Transactions on Computer Systems,* February 1990
- **S. FLOYD ; V. JACOBSON.** Random Early Detection gateways for Congestion Avoidance. *IEEE/ACM Transactions on Networking,* August 1993, vol. 1-4, 397-413
- **S. ATHURALIYA et al.** REM: active queue management. *IEEE Network,* 15 March 2001
- **RAMAKRISHNAN, K.K. ; FLOYD, S. ; BLACK, D.** The Addition of Explicit Congestion Notification (ECN) to IP. *Internet Engineering Task Force Request for comments 3168,* September 2001
- **D. WISCHIK.** Large Deviations and Internet Congestion. *PhD Dissertation,* September 1999
- **B. BRISCOE ; J. CROWCROFT.** *An Open ECN Service in the IP layer, Draft- draft-ietf-ts-vwg-ecn-ip-00*
- **B. PRABHAKAR et al.** Buffers: The great boon and bane of packet switching. *Plenary talk,* 2011, http://forum.stanford.edu/events/20111slides/plenary/2011plenaryPrabhakar.pdf